Europäisches Patentamt

(19) European Patent Office

Office européen des brevets

(11) Publication number: **0 017 415**
A1

(12) **EUROPEAN PATENT APPLICATION**

(21) Application number: **80300918.2**

(22) Date of filing: **24.03.80**

(51) Int. Cl.³: **F 24 J 3/02**

(30) Priority: 26.03.79 GB 7910544
10.12.79 GB 7942501

(43) Date of publication of application:
15.10.80 Bulletin 80/21

(84) Designated Contracting States:
AT BE CH DE FR GB IT LU NL SE

(71) Applicant: **NATIONAL RESEARCH DEVELOPMENT CORPORATION**
P.O. Box 236 Kingsgate House 66-74 Victoria Street
London SW1E 6SL(GB)

(72) Inventor: **Lettington, Alan Harold**
16 Staplow Road Worcester
County of Hereford and Worcester(GB)

(74) Representative: **Edwards, John Brian et al,**
Procurement Executive Ministry of Defence Patents 1 A
(4), Room 1932, 19th Floor Empress State Building Lillie
Road
London SW6 1TR(GB)

(54) **Solar heating panels.**

(57) A solar heating panel comprises a conduit (2, 3, 4, 5) for carrying a working fluid (6), such as water, for heating by solar radiation energy. The surface of the conduit facing the sun has a highly reflecting surface (13) and therefore emits little thermal radiation. The reflecting surface may be a polished conduit surface or a layer of aluminium foil fixed on the conduit. Covering the reflecting surface (13) is a coating (14) of a material absorbing to visible radiation and transparent to thermal radiation. This coating (14) may be a layer of hard carbon (18) deposited by glow discharge; or a semiconductor such as germanium or silicon in the form of particles in a plastics matrix. Alternately the coating (14) may be a layer of germanium or silicon (17) covered with a thin hard carbon layer (18); both layers (17, 18) being arranged to form an anti-reflection coating at visible wavelengths.

EP 0 017 415 A1

./...

Croydon Printing Company Ltd.

Fig.1.

## SOLAR HEATING PANELS

This invention relates to solar heating panels.

Such panels commonly comprise two spaced plates between which water flows to be heated by radiant energy from the sun. In order to absorb energy the outside of the plates are coated with a black paint. Unfortunately although black surfaces absorb visible radiation they are efficient radiators of thermal, infra-red radiation.

An object of this invention is to provide a solar panel which absorbs visible radiation with low emission of thermal radiation.

According to this invention a solar heating panel comprises a conduit through which a working fluid may pass for heating by radiation energy from the sun characterised in that the outside of the conduit has a highly reflecting surface covered with a thin layer which is absorbent to visible radiation, and transparent to thermal radiation.

The thin layer may be a composite layer comprising a first layer of an infra red transparent material such as germanium or silicon next to the reflecting layer and a second layer of hard diamond like carbon coating; the composite layer forming an anti-reflection coating at visible wavelengths. An additional very thin layer of oxide may be formed on the conduit to assist bonding of the germanium or silicon.

Alternatively the thin layer may be a single layer of glassy hard
carbon or a semiconductor material in the form of particles held in
a plastic matrix such as polypropolene or polyethylene.   The
semiconductor material may be silicon, or germanium or other material
having a band gap of 2-5 electron volts.

The conduit may be pipes, or spaces between plates which may be flat
or corrugated.

The working fluid may be water protected with anti-freeze additives
or any other suitable fluid.

The highly reflecting surface may be a layer or aluminium, copper,
silver, gold, chrome, or any other infra red reflecting material
foil and may be glued to the outside of the conduit.   Alternatively
the conduit may be polished or have a reflecting layer painted or
evaporated thereon.   The composite layer may be of germanium or
silicon followed by glassy diamond like carbon preferably deposited
by a radio frequency (RF) or direct current (DC) glow discharge
techniques in layer of about 1 $\mu$m (of germanium) and 0.08 $\mu$m (carbon).

The invention will now be described, by way of example only, with
reference to the accompanying drawings in which:-
    Figure 1 shows a sectional view of a solar panel heating a
        domestic hot water cylinder, and
    Figure 2 shows apparatus for applying a carbon layer to
        material.

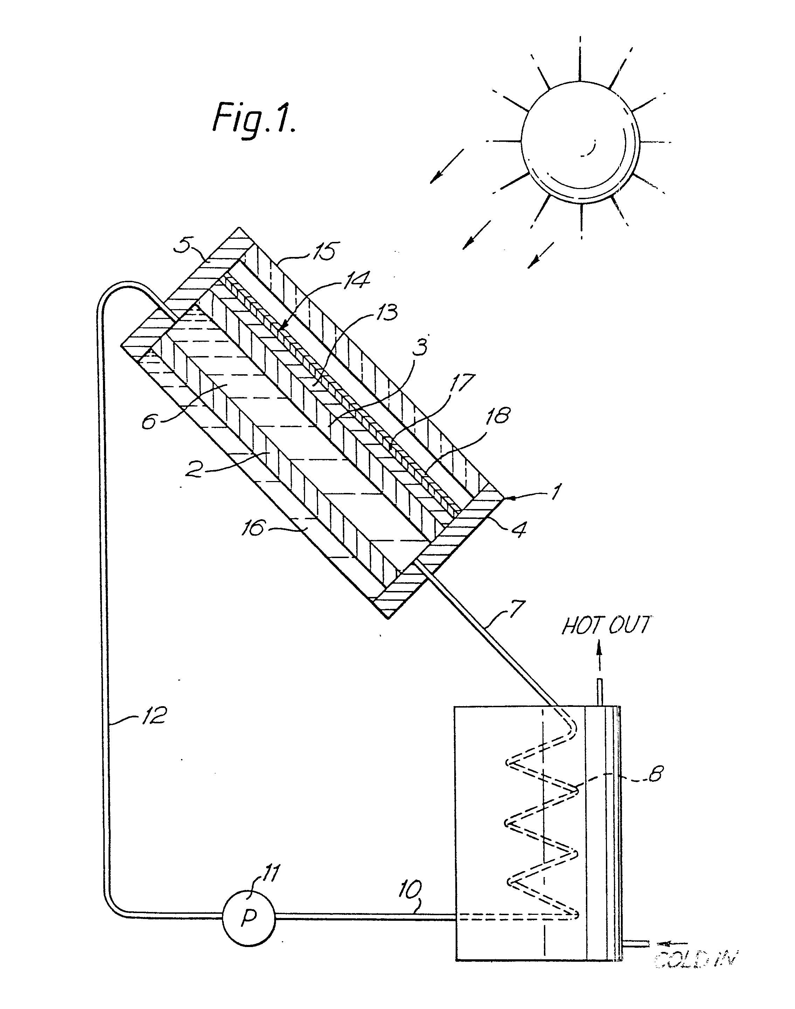

As shown in Figure 1 a solar heating panel 1 comprises two plates
2, 3 spaced apart by end pieces 4, 5.   Water 6 contained between
the plates is connected by an outlet pipe 7 to a heat exchange
coil 8 in a domestic hot water cylinder 9.   From the coil 8 the
water is passed through a pipe 10, a pump 11, and an inlet pipe 12
back into the solar panel 1.   On the upper surface of plate 3 is a
highly reflecting layer of aluminium foil 13 which may be glued to
the plate 3.   The foil 13 is coated with a composite layer 14
comprising a 1 $\mu$m thick layer of germanium 17 and a 0.08 $\mu$m thick

layer 18 of hard carbon. Spaced from the layer 14 is a glass sheet 15 to protect the remainder of the panel 1 and to prevent heat loss by conduction.

In operation visible or near infra-red radiation from the sun passes through the glass 15 and is absorbed mostly in the germanium layer 17. This raises the temperature of the layer 14, and consequently the foil 13, plate 3 and water 6. Thus heated the hot water 16 is circulated, by the pump 11, through heating coil where it heats water in the cylinder 9.

Radiation of energy from the panel 1 is prevented as follows. The layer 14 is absorbent to visible radiation. Furthermore, because the layers 17, 18 thickness and refractive indexes are arranged to provide an anti-reflection (in the visible wavelength range) coating on the polished surface 13, little visible radiation is reflected, thereby increasing the energy absorption of the layer 14. At longer, infra-red, wavelengths the germanium and carbon are transparent and hence the emission of infra red radiation is governed by the reflecting layer 13. Since a highly reflecting layer emits little radiation very little infra red radiation passes through the layer 14. Insulation 16 on the rear of the panel and all exposed pipe work 7, 10, 12 prevents heat loss at other parts of the system.

As an alternative to a layer of aluminium foil 13, a reflecting layer may be painted, sprayed, or evaporated onto the plate 3. Alternatively the plate 3 may be highly polished.

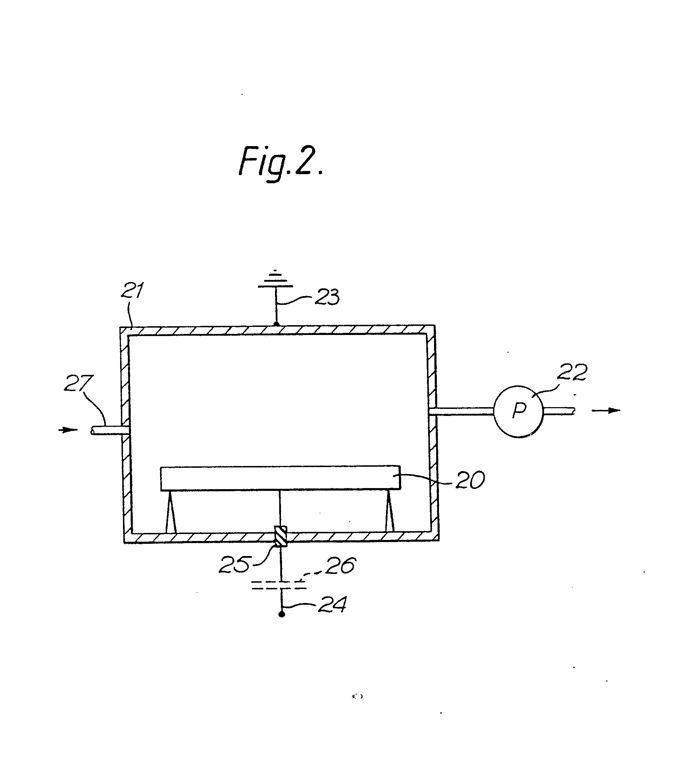

Apparatus for coating the foil 13, or any suitable reflecting surface, with germanium and carbon is shown in Figure 2. A specimen 20 to be coated is placed in an air tight metal container 21 which is then evacuated by a vacuum pump 22 to about $10^{05}$ Torr. A gas such as germane is continuously bled into the container 21 and the pressure maintained at about $10^{-2}$ Torr. by throttling the pump 22. The container 21 is connected to earth 23 whilst the specimen 20 is connected 24 through an insulated connector 25 to a -700 volts D.C. supply. As a result ionisation of the gas takes place with consequential dissociation of germanium and hydrogen atoms. Germanium ions impinge onto the heated specimen 20 to form a layer 17, having a time-dependent thickness.

Alternatively the germanium may be sputtered or deposited by other processes. For example a 1 μm thick layer is formed in about 50 minutes. The glow discharge process is repeated using a hydrocarbon gas such as methane or propane to deposit a 0.08 μm thick carbon layer 18. The layer 17, 18 thickness is calculated to provide an anti-reflecting coating 14 such that the carbon-germanium sandwich provides maximum absorption of solar radiation.

As an alternative to D.C. glow discharge RF glow discharge may be used. In this technique the D.C. supply of Figure 2 is replaced by an RF supply at 13 KHz frequency supplied through a capacitor (26) developing a cathode potential of about -700 volts. Operating conditions are as for D.C. operation.

The specimen 20 of Figure 2 may be a sheet of aluminium foil several metres long and wound from one roller to another whilst submitted to the bombardment of germanium and hydrogen atoms which causes a germanium layer to grow onto the exposed foil between the rollers. This is repeated to grow a carbon layer.

A layer of silicon instead of germanium may be grown using the gas silane.

Alternatively the silicon may be deposited using sputtering or other techniques.

For some polished surfaces a very thin oxide layer may be deposited or grown first to enhance bonding of the germanium or silicon.

For some applications the layer 17 of germanium or silicon may be omitted.    In this case visible light is absorbed in the 0.5 to 10 $\mu$m (typically 1 $\mu$m) thick black coloured carbon layer 18 but not so efficiently as for the anti-reflecting composite layer described above. As before a very thin bonding layer of oxide may be applied to the highly reflecting surface.

Claims:

1.      A solar heating panel comprising a conduit (2, 3, 4, 5) through which a working fluid (6) may pass for heating by radiation energy from the sun, characterised by a highly reflecting surface (13) on the outside of the conduit (3) covered with a thin layer (14) which is absorbent to visible radiation and substantially transparent to thermal radiation.

2.      A panel as claimed in claim 1 wherein the thin layer (14, 18) is a layer of hard carbon.

3.      A panel as claimed in claim 1 wherein the thin layer (14, 18) is a semiconductor material in the form of particles of a semiconductor having a band gap of 2 to 5 electron volts arranged in a plastic material matrix.

4.      A panel as claimed in claim 3 wherein the semiconductor material is germanium.

5.·     A panel as claimed in claim 3 wherein the semiconductor material is silicon.

6.      A panel as claimed in claim 2 wherein the thin layer (14) is a composite layer and has a first layer (17) of a different infra red transparent material arranged between the reflecting surface (13) and the hard carbon layer (18), the two layers (17, 18) being arranged to form an antireflection composite layer at visible wavelengths.

7.      A panel as claimed in claim 6 wherein the first layer (17) is a layer of germanium.

8.      A panel as claimed in claim 6 wherein the first layer (17) is a layer of silicon.

9.      A panel as claimed in claim 6 wherein a very thin oxide bonding layer is formed on the reflecting surface (13).

10.     A panel as claimed in any one of claims 1 to 9 wherein the reflecting surface (13) is formed by a surface of the conduit (3).

11.     A panel as claimed in any one of claims 1 to 9 wherein the reflecting surface (13) is a surface of a thin foil material fixed to the conduit (3).

12.     A panel as claimed in any one of claims 1 to 9 wherein the reflecting surface (13) is a layer of metal coated onto the surface of the conduit (3).

1/2

Fig.1.

# Fig.2.

European Patent Office

**EUROPEAN SEARCH REPORT**

| | DOCUMENTS CONSIDERED TO·BE RELEVANT | | CLASSIFICATION OF THE APPLICATION (Int. Cl.) |
|---|---|---|---|
| Category | Citation of document with indication, where appropriate, of relevant passages | Relevant to claim | |
| | DE - A1 - 2 604 019 (PHILIPS PATENTVER-WALTUNG) <br> * claims 1, 4,5; page 5, paragraph 4 * <br> -- | 1,2, <br> 11,12 | F 24 J 3/02 |
| | GB - A - 1 517 439 (PERKIN-ELMER CORP.) <br> * page 1, lines 36 to 40; page 1, lines 33 to 34; page 1, line 34; page 1, lines 56 to 62 * <br> -- | 1,4-6 | |
| | THIN SOLID FILMS, Vol. 54, No. 2, October 1978 <br> Lausanne <br> L.R. GILBERT et al. "Black Germanium Solar Selective Absorber Surfaces" <br> pages 149 to 157 <br> * page 150, paragraph 3 * <br> -- | 6,7 | TECHNICAL FIELDS SEARCHED (Int.Cl.) <br><br> F 24 J 3/00 |
| | APPLIED OPTICS, Vol. 17, No. 15, August 1978, New York <br> J.O. WHITE et al. "Amorphous Silicon as a Selective Absorber of Solar Energy: A Spectral Emissivity Study" <br> pages 2427 to 2430 <br> * page 2428, left column, paragraph 2 * <br> ---- | 6,8 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 20-06-1980 | PIEPER |

EPO Form 1503.1   06.78